# EUROPEAN PATENT SPECIFICATION

(11) **EP 2 981 452 B1**
(45) Date of publication and mention of the grant of the patent: **30.05.2018**
(21) Application number: 14780395.1
(22) Date of filing: 27.03.2014
(51) Int. Cl.: B62D 35/00

(54) **TRACTOR VEHICLE PROVIDED WITH A SIDE SKIRT AND METHOD IMPLEMENTED ON SUCH A TRACTOR VEHICLE**
ZUGFAHRZEUG MIT EINEM SEITENSCHWELLER UND MIT SOLCH EINEM ZUGFAHRZEUG DURCHGEFÜHRTES VERFAHREN
VÉHICULE TRACTEUR DOTÉ D'UNE JUPE LATÉRALE ET PROCÉDÉ MIS EN UVRE SUR UN VÉHICULE TRACTEUR

(30) Priority: 02.04.2013 SE 1350408
(43) Date of publication of application: 10.02.2016
(73) Proprietor: Scania CV AB, 151 87 Södertälje (SE)
(72) Inventor: ELOFSSON, Per, S-122 64 Enskede (SE)
(74) Representative: Scania CV AB
(86) International application number: PCT/SE2014/050374
(87) International publication number: WO 2014/163555

(56) References cited:
- WO-A1-2005/115804
- DE-A1-102005 021 517
- US-A- 4 611 847
- US-A1- 2006 152 038
- US-B1- 7 950 721

## Description

### FIELD OF THE INVENTION AND PRIOR ART

The present invention relates to a tractor vehicle with, on at least one side of it, a side skirt which extends rearwards in the vehicle's longitudinal direction from the region behind the front wheels and is so configured that in a working state of the vehicle it at least partly delineates laterally a space situated under a semitrailer attached to the vehicle, and to a method according to the preamble of the attached independent method claim.

Tractor vehicle means here a vehicle of the type which in everyday parlance is called a long-distance truck and is intended to have in a working state a semitrailer typically attached to it via a so-called fifth wheel coupling.

The tractor vehicle is provided with a said side skirt in order to reduce the vehicle's air resistance when in motion and thereby reduce its fuel consumption. Accordingly, each side of the vehicle is usually provided with such a side skirt, although the respective side skirts may possibly be configured differently, e.g. to cater for the vehicle's refuelling.

The smaller the gap, i.e. the distance between the upper edge of the side skirt and the lower edge of the semitrailer, the smaller will be the air resistance and hence the fuel consumption when the vehicle is in motion. There are however a number of factors which limit the possibility of bridging said gap.

The gap needs to be large enough for there to be no risk that the upper edge of the side skirt might foul the lower edge of the semitrailer during marshalling and when negotiating ferry ramps or the like or in cases where the semitrailer's forward portion for some other reason comes close to the side skirt.

Nor may the side skirt protrude so far upwards at the point for climbing onto the boarding step behind the tractor vehicle's driving cab that there is risk that a person thus climbing up or down relative to the boarding step might trip on the side skirt.

The side skirt also needs to be so configured as to facilitate access to a refuelling orifice.

### SUMMARY OF THE INVENTION

The object of the present invention is to propose a tractor vehicle of the kind defined in the introduction which solves the above problem in a way which in at least one respect is better than previous known tractor vehicles.

This object is achieved according to the invention by a tractor vehicle being provided with the features indicated in the attached claim 1.

The provision of an elongate element which can be caused to move between an active position in which it extends the side skirt upwards and thereby reduces said gap, and an inactive lower position, makes it possible for the gap to be reduced in situations which so allow, while at the same time the gap can be kept large enough in situations which require a larger gap. This means that in normal running of the tractor vehicle in a working state, i.e. towing a semitrailer, the elongate element can be in the active position and thereby reduce the air resistance of the vehicle combination and hence the fuel consumption of the tractor vehicle, but be in the inactive position, e.g. during marshalling and when negotiating ferry ramps, without risk of the semitrailer's lower edge fouling the element. In addition, the element is with advantage moved to the inactive position to allow access for refuelling and for climbing up and down the tractor vehicle's boarding step.

Side skirts suspended from trailers which can be regulated to hang down different distances from a trailer are previously known, inter alia from US 4 611 847 and US 7 950 721 B1. Further, DE102005021517 A1 discloses a motor vehicle which has a semi-trailer coupling and a coupling assembly for the coupling of a semi-trailer to the vehicle.

In one embodiment of the invention the tractor vehicle has means for detecting and sending information about its speed to the unit, and the unit is adapted to causing said movement means to move said element to the active position when the vehicle is above a predetermined threshold speed, and to move the element from the active position towards the inactive position when the vehicle is below this threshold speed. Assurance is thus afforded that the element will only be in its active position when it has a real effect upon the tractor vehicle's air resistance and hence fuel consumption, and be in the inactive position when the vehicle is stationary or moving slowly, as during marshalling and when negotiating ferry ramps. To this end, in one embodiment of the invention the unit is adapted to having a speed within the range 20-50 km/h, 20-40 km/h, 25-35 km/h or 30 km/h as said threshold speed. A threshold speed at this level affords assurance of the intended operation of said element.

In another embodiment of the invention the tractor vehicle has facilities for gathering, or being provided with, information about the state of roads, e.g. the frequency and size of unevennesses in carriageways, and for sending information about same to said unit, and the latter is adapted to using said information as a basis for causing said movement means to move said element relative to the side skirt. This means that when the vehicle is travelling on an unusually uneven carriageway the unit can cause the element to be in a position in which its upper edge is at a lower level than in said active position, in order to avoid any risk that the element might foul the semitrailer's lower edge and thereby suffer damage.

In another embodiment of the invention the tractor vehicle has facilities adapted to detecting the distance between the upper edge of the side skirt and the lower edge of a semitrailer attached to the tractor vehicle, and to sending information about this to the unit, which is adapted to using the distance thus detected as a basis for causing said movement means to move the element. This makes it possible, when the vehicle is in motion, for the element to be in the active position irrespective of the running conditions and, if for any reason, e.g. when passing over some unevenness, the semitrailer's lower edge comes close to the side skirt's upper edge, for the element to be moved downwards from the active position. In a further development of this embodiment of the invention the unit is adapted to moving the element towards the inactive position when said distance is less than a predetermined value and the element is in an active position.

In another embodiment of the invention the tractor vehicle also has operating means usable by a driver of the vehicle to send orders to said unit to cause said movement means to move the element relative to the side skirt in accordance with orders thus given. This makes it possible for the driver to determine the position of said element manually if so desired.

In another embodiment of the invention the elongate element is a substantially platelike element with a height intended, in the element's active position, to extend upwards beyond the side skirt towards a said semitrailer by 30-300 mm, 50-250 mm or 100-200 mm.

In another embodiment of the invention said movement means is adapted to moving the element by shifting it vertically or substantially vertically relative to the side skirt on a tractor vehicle standing on a horizontal running surface. In this case the element is with advantage put into the inactive position in order to be at least partly concealed behind, and thereby be protected by, the side skirt.

In another embodiment of the invention said movement means is adapted to moving the element relative to the side skirt by lowering it from said active position about a spindle which is parallel or substantially parallel with said longitudinal direction, with its upper boundary directed inwards towards the interior of said space. The risk of damage to the element in the inactive position thus becomes slight.

In another embodiment of the invention the element is configured to be movable, against the action of said movement means, to an inactive position in which its upper edge is at the same height as or lower than that of the side skirt. This makes it possible for the element to be concealed behind the side skirt and be protected from damage in the inactive position in which it performs no function.

In another embodiment of the invention the tractor vehicle has a said side skirt with a said elongate element on each of its long sides. This makes it possible for the elongate elements on the two long sides to differ in dimensions or shape if so desired.

The invention proposes also a method for altering the air resistance coefficient of a tractor vehicle in a working state with a semitrailer attached to it and with, on at least one side of it, a side skirt which extends rearwards in the tractor vehicle's longitudinal direction from the region behind its wheels and is configured to partly delineate laterally a space situated under the semitrailer, which space is provided with features as in the characterising part of the attached independent method claim. The advantages of such a method and of the embodiments of the invention which are covered by the dependent method claims are indicated with all desirable clarity by the above discussion of the tractor vehicle according to the invention.

The invention relates also to a computer programme, a computer programme product, and an electronic control unit.

Other advantageous features and advantages of the invention are indicated by the description set out below.

### BRIEF DESCRIPTION OF THE DRAWINGS

Embodiments of the invention cited by way of examples are described below with reference to the attached drawings, in which
- Fig. 1: is a side view illustrating a tractor vehicle according to the present invention in a working state, i.e. with a semitrailer coupled to it, when moving forwards,
- Fig. 2: is a schematic view illustrating how said element of a tractor vehicle according to the invention may be caused to move according to various embodiments of the invention,
- Fig. 3: is a perspective view of part of a tractor vehicle according to the invention with said element in an active position,
- Fig. 4: is a prespective view of the lower portion of the tractor vehicle depicted in Fig. 3, with the element in an inactive position,
- Fig. 5: is a view corresponding Fig. 4 illustrating another embodiment of the invention, with the element in an inactive position,
- Fig. 6: is a flowchart illustrating a method according to an embodiment of the invention, and
- Fig. 7: is a schematic diagram of an electronic control unit for implementing a method according to the invention.

### DETAILED DESCRIPTION OF EMBODIMENTS OF THE INVENTION

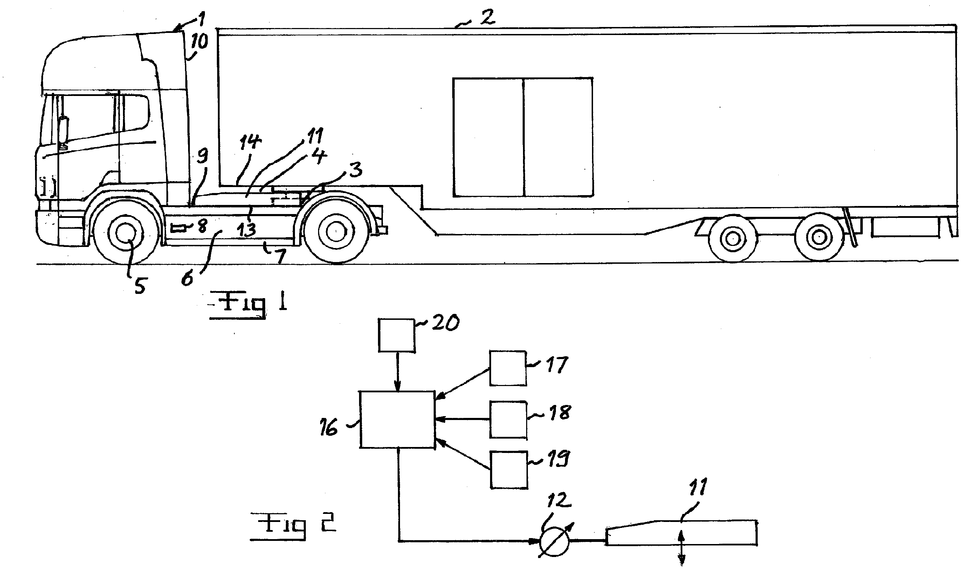

Fig. 1 illustrates schematically a tractor vehicle 1 according to an embodiment of the invention in a working state, i.e. a state in which it performs its function of towing a semitrailer 2 which in a conventional way is attached to the tractor vehicle via a schematically depicted so-called fifth-wheel coupling 3. A space 4 situated under what in the running direction is the forward portion of the semitrailer is partly occupied by part of the tractor vehicle, and when the vehicle is moving forwards at its normal cruising speed, e.g. 60-90 km/h, the presence of this space will have a perceptible effect upon the air resistance to which the tractor vehicle/semitrailer combination is subject if this space is not protected laterally. Accordingly the tractor vehicle is conventionally provided on each side with a side skirt 6 which extends in the vehicle's longitudinal direction rearwards from the region behind the front wheels 5 and is configured to partly delineate the space 4 laterally when the vehicle is in said working state.

Such a side skirt thus normally extends downwards as far as is possible without causing a risk that it might in some situations come into contact with the running surface on which the tractor vehicle may be expected to travel. For the sake of safety the lowest portion of the side skirt may take the form of a rubber strip 7, while the rest of it will be rigid and strong enough to be provided with a foothold 8 to be used by a driver of the vehicle wishing to make his/her way up onto the boarding step 9 situated behind the vehicle's driving cab 10. The side skirt does however normally extend upwards no further than the surface of the boarding step, to avoid any risk of tripping on it.

Even if this problem was disregarded in favour of trying to extend the side skirt further upwards, it would be necessary to ensure that during any kind of vehicle movement, e.g. travelling up a ferry ramp, the semitrailer's lower edge could not foul and damage the side skirt, nor block access to the refuelling orifice.

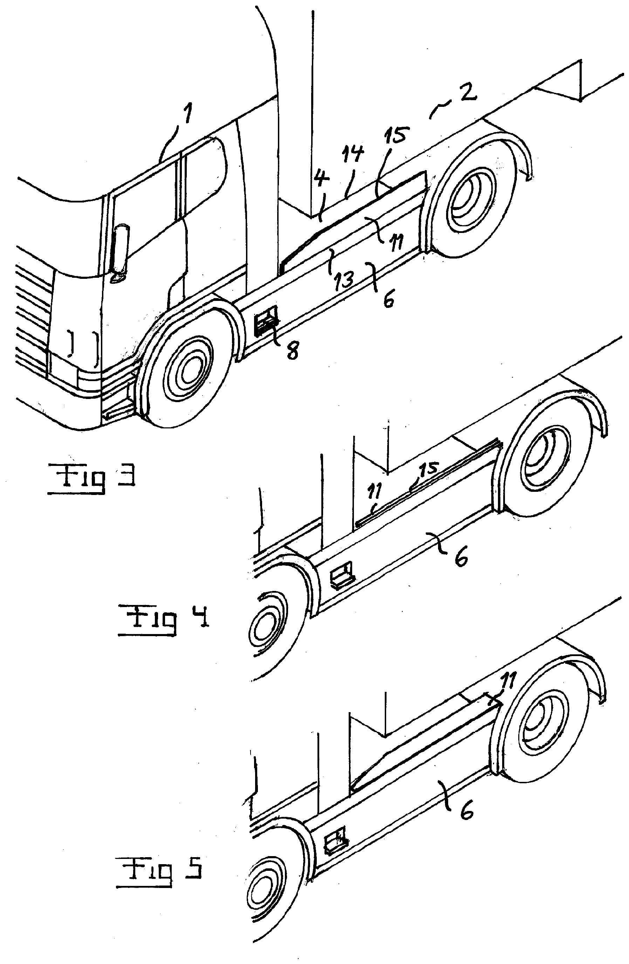

To reduce the air resistance coefficient of the tractor vehicle/semitrailer combination while nevertheless avoiding the potential problems arising from a heightened side skirt, the tractor vehicle according to the invention has an elongate platelike element 11 adapted to extending in the tractor vehicle's longitudinal direction along at least one, although preferably along each, side skirt and arranged to be movable relative to the side skirt. Here we refer also to Figs. 3 and 4. More specifically, the platelike element is so arranged as to be, when seen from the side, partly behind the side skirt and be movable in vertical directions relative to the side skirt, assuming that the tractor vehicle is on a horizontal running surface.

How the element 11 according to the invention may be operated is illustrated in Fig. 2. Means 12, e.g. an electric motor, are provided to move the element between at least one active position (as in Fig. 1 and Fig. 3) in which in the tractor vehicle's working state it at least partly bridges the distance between an upper edge 13 of the side skirt and a lower edge 14 of said semitrailer and thereby serves as an upward continuation of the side skirt, and an at least partly inactive position (as in Fig. 4) in which its upper boundary 15 is at a greater distance from said lower edge of the semitrailer than in the active position. Accordingly, the element may typically, in its active position, extend upwards beyond the side skirt by about 200 mm, while a side skirt typically has a height in a similar direction of 500-800 mm.

The tractor vehicle is provided with a unit 16, e.g. an electronic control unit, adapted to controlling the movement means 12. The unit 16 receives information from various components of the tractor vehicle to serve as a basis for controlling the movement means 12. Means 17 detect and send information about the tractor vehicle's speed to the unit 16, which is adapted to causing the movement means 12 to move the element 11 towards the active position when the tractor vehicle is above a predetermined threshold speed, e.g. 30 km/h, and to move the element from the active position towards the inactive position when the tractor vehicle is below this threshold speed. Assurance is thus afforded that the element will not be in the active position when the tractor vehicle is stationary or moving so slowly that this position will have no appreciable effect upon the air resistance of the vehicle combination.

Facilities 18 are provided for gathering, e.g. via the internet, or being provided with, information about the state of roads, e.g. the frequency and size of unevennesses in carriageways, and for sending this information to the unit 16, which is adapted to taking this information into account when operating the movement means 12. Should part of a road for any reason be so uneven that when the vehicle combination is in motion substantial relative movements between the semitrailer and the tractor vehicle may occur, the unit 16 will thus be able to cause the movement means to move the element 11 towards the inactive position, in order either to reach that position or, where applicable, to be between the active and inactive positions.

The tractor vehicle might also have facilities 19 for detecting the distance between the upper edge 13 of the side skirt and the lower edge 14 of a semitrailer attached to the tractor vehicle, and for sending information about this distance to the unit, which is then adapted to causing the movement means 12 to move the element in such a way in response to the distance thus detected that when the vehicle combination suddenly runs over an unevenness, causing movement of the semitrailer's lower edge 14 towards the side skirt, the element would be moved towards the inactive position, thereby preventing contact between the semitrailer and the side skirt's upper boundary 15. The presence of such a facility 19 would make it possible for the upper boundary 15 of the element 11 in the active position to be much nearer to a lower edge of a semitrailer, with consequently optimised effects upon the air resistance coefficient and hence upon the tractor vehicle's fuel consumption.

Also illustrated is the provision of operating means 20 which may be used by a driver of the tractor vehicle to send orders to the unit 16 to cause the movement means 12 to move the element 11 relative to the side skirt in accordance with orders thus given. This enables the driver to ensure manually that the element is put into the state desired by him/her, and such manual control may for example be superordinate to the control which is based upon the information from the means 17 and the facilities 18, 19 as regards movement towards the inactive position, but not towards the active position.

Fig. 5 illustrates a possible alternative to what is depicted in Figs. 3 and 4 with regard to the movability of the element 11 relative to the side skirt 6. Here the element is instead movable relative to the side skirt by being lowered from the active position about a spindle which is parallel or substantially parallel with the tractor vehicle's longitudinal direction, with its upper boundary 15 directed inwards towards the interior of the space 4. In the state depicted in Fig. 5 the element is consequently in an inactive lowered position and can be pivoted about said spindle to an active position substantially corresponding to that depicted in Fig. 3.

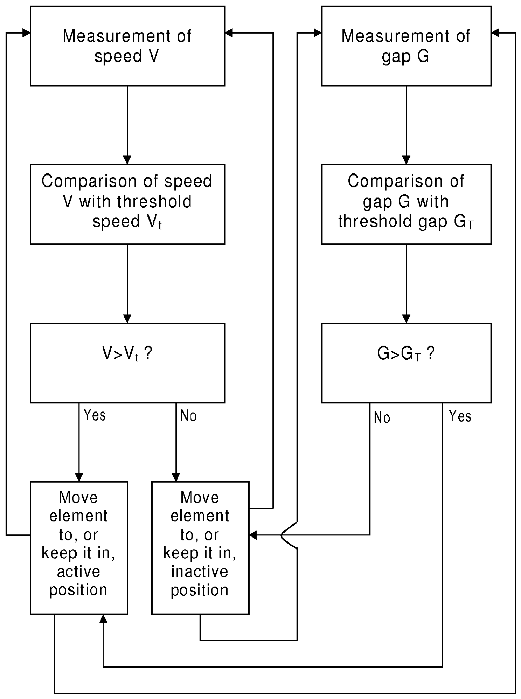

Fig. 6 is a flowchart illustrating a method according to an embodiment of the invention for altering the air resistance coefficient of a tractor vehicle in a working state with a semitrailer attached to it of the type illustrated in Figs. 1 and 3-5. As a first step S₁ the speed of the tractor vehicle is measured, and as a second step S₂ the speed thus measured is compared with a threshold speed. Step S₃ asks whether the measured speed is greater than the threshold speed, and if the answer is affirmative the method moves on to step S₄, in which the element is moved to or kept in the active position. If on the contrary the answer to the question is negative, the method moves on to step S₅, in which the element is caused to move to or remain in the inactive position. This procedure is repeated continuously or at suitable intervals of time. In parallel therewith, at a step S₆ the gap G is measured as the distance between the lower edge 14 of the semitrailer and the upper edge 13 of the side skirt, and at step S₇ this gap is compared with a threshold gap, and step S₈ asks whether the measured gap is greater than the threshold gap and, if the answer is affirmative the method goes to step S₄ and if it is negative the method goes to step S₅. This part of the method is likewise repeated continuously or intermittently.

Computer programme code for implementing a method according to the invention is with advantage included in a computer programme which can be read into the internal memory of a computer, e.g. the internal memory of an electronic control unit of a tractor vehicle. Such a computer programme is with advantage provided via a computer programme product comprising a data storage medium which can be read by an electronic control unit and which has the computer programme stored on it. Said data storage medium is for example an optical data storage medium in the form of a CD ROM disc, a DVD disc etc., a magnetic data storage medium in the form of a hard disc, a diskette, a cassette tape etc., or a flash memory or a memory of the ROM, PROM, EPROM or EEPROM type.

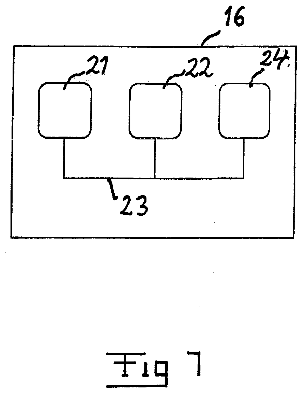

Fig. 7 illustrates very schematically an electronic control unit 16 comprising an execution facility 21, e.g. a central processor unit (CPU), for execution of computer software. The execution facility 21 communicates with a memory 22, e.g. of the RAM type, via a data bus 23. The control unit 16 comprises also a data storage medium 24, e.g. in the form of a flash memory or a memory of the ROM, PROM, EPROM or EEPROM type. The execution facility 21 communicates with the data storage medium 24 via the data bus 23. A computer programme comprising computer programme code for implementing a method according to the invention, e.g. in accordance with the embodiment illustrated in Fig. 6, is stored on the data storage medium 24.

The invention is of course in no way restricted to the embodiments described above, as numerous possibilities for modifications thereof are likely to be obvious to one skilled in the art without thereby deviating from the scope of the invention such as is defined in the attached claims.

It would for example be possible for the element to be movable to two or more fixed active positions or be settable steplessly to different positions relative to the respective side skirt.

## Claims

1. A tractor vehicle with, on at least one side of it, a side skirt (6) which extends rearwards in the tractor vehicle's longitudinal direction from the region behind the front wheels (5) and is configured, when the tractor vehicle is towing a semi-trailer, to at least partly delineate laterally a space (4) which is situated under a semitrailer (2) attached to the tractor vehicle comprising an elongate element (11) adapted to extend in said longitudinal direction along, and to be movable relative to, at least one said side skirt (6),
**characterised in that** it comprises
• means (12) adapted to moving the element between at least one active position in which, when the tractor vehicle is towing a semi-trailer, it at least partly bridges the distance between an upper edge (13) of the side skirt and a lower edge (14) of said semitrailer and thereby serves as an upward continuation of the side skirt, and an at least partly inactive position in which its upper boundary (15) is at a greater distance from said lower edge of the semitrailer than in the active position, and
• a unit (16) adapted to operating said movement means.

2. A tractor vehicle according to claim 1, **characterised in that** it comprises means (17) adapted to detecting and sending information about the tractor vehicle's speed to the unit (16), and that the unit is adapted to causing said movement means (12) to move said element (11) towards the active position when the tractor vehicle is above a predetermined threshold speed, and to move the element from the active position towards the inactive position when the tractor vehicle is below this threshold speed.

3. A tractor vehicle according to claim 2, **characterised in that** the unit (16) is configured to have a speed within the range 20-50 km/h, 20-40 km/h, 25-35 km/h or 30 km/h as said threshold speed.

4. A tractor vehicle according to any one of the foregoing claims, **characterised in that** it comprises facilities (18) adapted to gathering, or being provided with, information about the state of roads, e.g. the frequency and size of unevennesses in carriageways, and to sending information about same to said unit (16), and that the unit is adapted to using said information as a basis for causing said movement means (12) to move said element (11) relative to the side skirt.

5. A tractor vehicle according to any one of the foregoing claims, **characterised in that** it comprises facilities (19) adapted to detecting the distance between the upper edge (13) of the side skirt and the lower edge (14) of a semitrailer attached to the tractor vehicle, and to sending information about same to the unit (16), and that the unit is adapted to using the distance thus detected as a basis for causing said movement means (12) to move the element (11).

6. A tractor vehicle according to claim 5, **characterised in that** the unit is adapted to moving the element towards the inactive position when said distance is less than a predetermined value and the element (11) is in an active position.

7. A tractor vehicle according to any one of the foregoing claims, **characterised in that** it comprises operating means (20) which can be used by a driver to send orders to said unit (16) to cause said movement means (12) to move the element (11) relative to the side skirt (6) in accordance with orders thus given.

8. A tractor vehicle according to any one of the foregoing claims, **characterised in that** the elongate element (11) is a substantially platelike element with a height intended, when the element is in an active position, to extend upwards beyond the side skirt towards a said semitrailer by 30-300 mm, 50-250 mm or 100-200 mm.

9. A method for altering the air resistance coefficient of a tractor vehicle (1) towing a semi-trailer (2) attached to it and with, on at least one side of it, a side skirt (6) which extends rearwards in the vehicle's longitudinal direction from a region behind its front wheels (5) and is configured to at least partly delineate laterally a space (4) situated under the semitrailer, **characterised in that** it comprises the step of a)causing an elongate element (11), which is arranged to extend in said longitudinal direction along at least one said side skirt, to move relative to the side skirt between at least one active position in which the element partly bridges the distance between an upper edge (13) of the side skirt and a lower edge (14) of a said semitrailer, thereby serving as an upward continuation of the side skirt, and an at least partly inactive position in which the element's upper boundary (15) is at a greater distance from said lower edge of the semitrailer than in the active position.

10. A method according to claim 9, **characterised in that** it comprises the steps of
b)detecting the tractor vehicle's speed, and
c) comparing the value of the speed detected with that of a predetermined threshold speed,
and that the movement in step a) is towards the active position when the tractor vehicle speed is above said threshold speed, but from the active position towards the inactive position when the tractor vehicle is below the threshold speed.

11. A method according to claim 9 or 10, **characterised in that** it comprises the step of
d)detecting the distance between the upper edge (13) of the side skirt and the lower edge (14) of a semitrailer attached to the tractor vehicle,
and that the movement in step a) takes place on the basis of the distance thus detected.

12. A computer programme which can be loaded directly into the internal memory of a computer and which comprises computer programme code for causing the computer, for a tractor vehicle (1) towing a semi-trailer (2) attached to it and with, on at least one side of it, a side skirt (6) which extends rearwards in the tractor vehicle's longitudinal direction from a region behind its front wheels (5) and is configured to at least partly delineate laterally a space (4) situated under the semitrailer, to
- cause an elongate element (11), which is arranged to extend in said longitudinal direction along at least one said side skirt (6), to move relative to the side skirt between at least one active position in which the element partly bridges the distance between an upper edge (13) of the side skirt and a lower edge (14) of a said semitrailer, thereby serving as an upward continuation of the side skirt, and an at least partly inactive position in which the element's upper boundary (15) is at a greater distance from said lower edge of the semitrailer than in the active position.

13. A computer programme product comprising a data storage medium which can be read by a computer and on which the computer programme code of a computer programme programme according to claim 12 is stored.

14. An electronic control unit of a vehicle comprising an execution facility (21), a memory (22) which is connected to the execution facility and a data storage medium (24) which is connected to the execution facility and has stored on it the computer programme code of a computer programme according to claim 12.

## Patentansprüche

1. Zugfahrzeug mit einem Seitenschweller (6) auf mindestens einer Seite desselben, der sich in der Längsrichtung des Zugfahrzeugs von dem Bereich hinter den Vorderrädern (5) aus nach hinten erstreckt und konfiguriert ist, wenn das Zugfahrzeug einen Sattelanhänger zieht, um mindestens teilweise einen Raum (4) seitlich abzugrenzen, der sich unter einem Sattelanhänger (2) befindet, der an das Zugfahrzeug angehängt ist, das ein längliches Element (11) umfasst, das angepasst ist, um sich in der Längsrichtung entlang des mindestens einen Seitenschwellers (6) zu erstrecken und im Verhältnis dazu bewegbar zu sein,
**dadurch gekennzeichnet, dass** es umfasst:
• Mittel (12), die angepasst sind, um das Element zwischen mindestens einer aktiven Position, in der es, wenn das Zugfahrzeug einen Sattelanhänger zieht, den Abstand zwischen einem oberen Rand (13) des Seitenschwellers und einem unteren Rand (14) des Sattelanhängers mindestens teilweise überbrückt und dadurch als eine Fortsetzung des Seitenschwellers nach oben dient, und einer mindestens teilweise inaktiven Position zu bewegen, in der sich seine obere Grenze (15) in einem größeren Abstand von dem unteren Rand des Sattelanhängers als in der aktiven Position befindet, und
• eine Einheit (16), die angepasst ist, um die Bewegungsmittel zu betätigen.

2. Zugfahrzeug nach Anspruch 1, **dadurch gekennzeichnet, dass** es Mittel (17) umfasst, die angepasst sind, um Informationen über die Geschwindigkeit des Zugfahrzeugs zu detektieren und an die Einheit (16) zu senden, und dass die Einheit angepasst ist, um zu bewirken, dass die Bewegungsmittel (12) das Element (11) in die aktive Position bewegen, wenn sich das Zugfahrzeug über einer vorbestimmten Schwellengeschwindigkeit befindet, und um das Element von der aktiven Position in die inaktive Position zu bewegen, wenn sich das Zugfahrzeug unter dieser Schwellengeschwindigkeit befindet.

3. Zugfahrzeug nach Anspruch 2, **dadurch gekennzeichnet, dass** die Einheit (16) konfiguriert ist, um eine Geschwindigkeit in dem Bereich von 20 bis 50 km/h, 20 bis 40 km/h, 25 bis 35 km/h oder 30 km/h als Schwellengeschwindigkeit aufzuweisen.

4. Zugfahrzeug nach einem der vorhergehenden Ansprüche, **dadurch gekennzeichnet, dass** es Einrichtungen (18) umfasst, die angepasst sind, um Informationen über den Zustand der Straßen, beispielsweise die Häufigkeit und Größe von Unebenheiten von Fahrbahnen, zu erheben oder mit diesen versorgt zu werden, und um Informationen darüber an die Einheit (16) zu senden, und dass die Einheit angepasst ist, um die Informationen als Grundlage zu verwenden, um zu bewirken, dass die Bewegungsmittel (12) das Element (11) im Verhältnis zu dem Seitenschweller bewegen.

5. Zugfahrzeug nach einem der vorhergehenden Ansprüche, **dadurch gekennzeichnet, dass** es Einrichtungen (19) umfasst, die angepasst sind, um den Abstand zwischen dem oberen Rand (13) des Seitenschwellers und dem unteren Rand (14) eines Sattelanhängers, der an das Zugfahrzeug angehängt ist, zu detektieren und um Informationen darüber an die Einheit (16) zu senden, und dass die Einheit angepasst ist, um den somit detektierten Abstand als Grundlage zu verwenden, um zu bewirken, dass die Bewegungsmittel (12) das Element (11) bewegen.

6. Zugfahrzeug nach Anspruch 5, **dadurch gekennzeichnet, dass** die Einheit angepasst ist, um das Element in die inaktive Position zu bewegen, wenn der Abstand kleiner als ein vorbestimmter Wert ist und sich das Element (11) in einer aktiven Position befindet.

7. Zugfahrzeug nach einem der vorhergehenden Ansprüche, **dadurch gekennzeichnet, dass** es Betätigungsmittel (20) umfasst, die von einem Fahrer verwendet werden können, um Befehle an die Einheit (16) zu senden, um zu bewirken, dass die Bewegungsmittel (12) das Element (11) im Verhältnis zu dem Seitenschweller (6) gemäß den somit erteilten Befehlen bewegen.

8. Zugfahrzeug nach einem der vorhergehenden Ansprüche, **dadurch gekennzeichnet, dass** das längliche Element (11) ein im Wesentlichen plattenartiges Element mit einer Höhe ist, die dazu gedacht ist, wenn sich das Element in einer aktiven Position befindet, sich nach oben über den Seitenschweller hinaus in Richtung auf den Sattelanhänger um 30 bis 300 mm, 50 bis 250 mm oder 100 bis 200 mm zu erstrecken.

9. Verfahren zum Ändern des Luftwiderstandsbeiwerts eines Zugfahrzeugs (1), das einen Sattelanhänger (2) zieht, der daran angehängt ist, und mit auf mindestens einer Seite desselben einem Seitenschweller (6), der sich in der Längsrichtung des Zugfahrzeugs von der Region hinter seinen Vorderrädern (5) aus nach hinten erstreckt und konfiguriert ist, um mindestens teilweise einen Raum (4) seitlich abzugrenzen, der sich unter einem Sattelanhänger (2) befindet,
**dadurch gekennzeichnet, dass** es den folgenden Schritt umfasst
a) Bewirken, dass ein längliches Element (11), das eingerichtet ist, um sich in der Längsrichtung entlang des mindestens einen Seitenschwellers zu erstrecken, um sich im Verhältnis zu dem Seitenschweller zwischen mindestens einer aktiven Position, in der das Element den Abstand zwischen einem oberen Rand (13) des Seitenschwellers und einem unteren Rand (14) des Sattelanhängers teilweise überbrückt, wodurch es als eine Fortsetzung des Seitenschwellers nach oben dient, und einer mindestens teilweise inaktiven Position zu bewegen, in der sich die obere Grenze (15) des Elements in einem größeren Abstand von dem unteren Rand des Sattelanhängers als in der aktiven Position befindet.

10. Verfahren nach Anspruch 9, **dadurch gekennzeichnet, dass** es folgende Schritte umfasst
b) Detektieren der Geschwindigkeit des Zugfahrzeugs, und
c) Vergleichen des Werts der detektierten Geschwindigkeit mit dem einer vorbestimmten Schwellengeschwindigkeit,
und dass die Bewegung in Schritt a) in die aktive Position geht, wenn die Geschwindigkeit des Zugfahrzeugs über der Schwellengeschwindigkeit liegt, jedoch von der aktiven Position in die inaktive Position geht, wenn sich das Zugfahrzeug unter der Schwellengeschwindigkeit befindet.

11. Verfahren nach Anspruch 9 oder 10, **dadurch gekennzeichnet, dass** es den folgenden Schritt umfasst
d) Detektieren des Abstands zwischen dem oberen Rand (13) des Seitenschwellers und dem unteren Rand (14) eines Sattelanhängers, der an das Zugfahrzeug angehängt ist,
und dass die Bewegung in Schritt a) auf der Grundlage des somit detektierten Abstands stattfindet.

12. Computerprogramm, das direkt in den internen Speicher eines Computers geladen werden kann und das Computerprogrammcode umfasst, um zu bewirken, dass der Computer für ein Zugfahrzeug (1), das einen Sattelanhänger (2) zieht, der daran angehängt ist, und mit auf mindestens einer Seite desselben einem Seitenschweller (6), der sich in der Längsrichtung des Zugfahrzeugs von einer Region hinter seinen Vorderrädern (5) aus nach hinten erstreckt und konfiguriert ist, um mindestens teilweise einen Raum (4) seitlich abzugrenzen, der sich unter dem Sattelanhänger befindet, um zu bewirken,
- dass sich ein längliches Element (11), das eingerichtet ist, um sich in der Längsrichtung entlang des mindestens einen Seitenschwellers (6) zu erstrecken, im Verhältnis zu dem Seitenschweller zwischen mindestens einer aktiven Position, in der das Element den Abstand zwischen einem oberen Rand (13) des Seitenschwellers und einem unteren Rand (14) eines Sattelanhängers teilweise überbrückt, wodurch es als eine Fortsetzung des Seitenschwellers nach oben dient, und einer mindestens teilweise inaktiven Position bewegt, in der sich die obere Grenze (15) des Elements in einem größeren Abstand von dem unteren Rand des Sattelanhängers als in der aktiven Position befindet.

13. Computerprogrammprodukt, umfassend ein Datenspeichermedium, das durch einen Computer gelesen werden kann und auf dem der Computerprogrammcode eines Computerprogramms nach Anspruch 12 gespeichert ist.

14. Elektronische Steuereinheit eines Fahrzeugs, umfassend eine Ausführungseinrichtung (21), einen Speicher (22), der mit der Ausführungseinrichtung verbunden ist, und ein Datenspeichermedium (24), das mit der Ausführungseinrichtung verbunden ist und auf dem der Computerprogrammcode eines Computerprogramms nach Anspruch 12 gespeichert ist.

## Revendications

1. Véhicule tracteur avec, sur au moins un de ses côtés, une jupe latérale (6) qui s'étend vers l'arrière, dans la direction longitudinale du véhicule tracteur, à partir d'une zone derrière les roues avant et qui est configurée pour délimiter au moins partiellement latéralement un espace (4) qui, lorsque le véhicule tracteur tracte une semi-remorque, est situé en-dessous d'une semi-remorque (2) attachée au véhicule tracteur comprenant un élément allongé (11) adapté pour s'étendre dans la direction longitudinale le long de, et pour être déplaçable par rapport à ladite au moins une jupe latérale (6),
**caractérisé en ce qu'**il comprend
- des moyens (12) adaptés pour déplacer l'élément entre au moins une position active dans laquelle, lorsque le véhicule tracteur tracte une semi-remorque, il couvre la distance entre un bord supérieur (13) de la jupe latérale et un bord inférieur (14) de la semi-remorque et sert ainsi comme une prolongation vers le haut de la jupe latérale, et une position au moins partiellement inactive dans laquelle sa limite supérieure (15) se trouve à une distance plus grande du bord inférieur de la semi-remorque que dans la position active, et
- une unité (16) adaptée pour faire fonctionner les moyens de déplacement.

2. Véhicule tracteur selon la revendication 1, **caractérisé en ce qu'**il comprend des moyens (17) adaptés pour détecter et envoyer à l'unité (16) des informations concernant la vitesse du véhicule tracteur et **en ce que** l'unité est adaptée pour faire les moyens de déplacement (12) déplacer l'élément (11) vers la position active lorsque le véhicule tracteur dépasse un seuil de vitesse prédéterminé et déplacer l'élément de la position active vers la position inactive lorsque le véhicule tracteur passe en-dessous de la vitesse seuil.

3. Véhicule tracteur selon la revendication 2, **caractérisé en ce que** l'unité '16) est configurée pour avoir une vitesse dans la plage de 20 à 50 km/h, 20 à 40 km/h, 25 à 35 km/h ou de de 30 km/h comme vitesse seuil.

4. Véhicule tracteur selon l'une des revendications précédentes, **caractérisé en ce qu'**il comprend des moyens (18) adaptés pour collecter ou pour recevoir des informations concernant l'état des routes, par exemple la fréquence et la taille des inégalités de la chaussée, et pour envoyer des informations concernant cela à l'unité (16), et **en ce que** l'unité est adaptée pour utiliser ces informations comme base pour faire les moyens de déplacement (12) déplacer l'élément (11) vers la jupe latérale.

5. Véhicule tracteur selon l'une des revendications précédentes, **caractérisé en ce qu'**il comprend des moyens (19) adaptés pour détecter la distance entre le bord supérieur (13) de la jupe latérale et le bord inférieur (14) d'une semi-remorque attachée au véhicule tracteur, et pour envoyer les informations concernant cela à l'unité (16), et **en ce que** l'unité est adaptée pour utiliser la distance ainsi détectée comme base pour faire les moyens de déplacement (12) déplacer l'élément (11).

6. Véhicule tracteur selon la revendication 5, **caractérisé en ce que** l'unité est adaptée pour déplacer l'élément vers la position inactive, lorsque la distance est inférieure à une valeur prédéterminée et l'élément (11) est dans une position active.

7. Véhicule tracteur selon l'une des revendications précédentes, **caractérisé en ce qu'**il comprend des moyens d'actionnement (20) qui peuvent être utilisés par un conducteur pour envoyer des ordres à l'unité (16) pour faire les moyens de déplacement (12) déplacer l'élément (11) par rapport à la jupe latérale (6) selon les ordres ainsi donnés.

8. Véhicule tracteur selon l'une des revendications précédentes, **caractérisé en ce que** l'élément allongé (11) est un élément ayant essentiellement la forme d'une plaque avec une hauteur qui est destinée à s'étendre, lorsque l'élément est dans une position active, vers le haut, au-delà de la jupe latérale, vers une semi-remorque, par 30 à 300 mm, 50 à 250 mm ou 100 à 200 mm.

9. Procédé pour modifier le coefficient de résistance de l'air d'un véhicule tracteur (1) tractant une semi-remorque (2) attachée au premier et ayant sur au moins un de ses côtés, une jupe latérale (6) qui s'étend vers l'arrière, dans la direction longitudinale du véhicule tracteur, à partir d'une zone derrière les roues avant (5) et qui est configurée pour délimiter au moins partiellement latéralement un espace (4) situé en-dessous de la semi-remorque,
**caractérisé en ce qu'**il comprend l'étape de
a) faire déplacer un élément allongé (11) qui est configuré pour s'étendre dans ladite direction longitudinale le long de ladite au moins une jupe latérale, par rapport à la jupe latérale entre au moins une position active dans laquelle il couvre la distance entre un bord supérieur (13) de la jupe latérale et un bord inférieur (14) de la semi-remorque et sert ainsi comme une prolongation vers le haut de la jupe latérale, et une position au moins partiellement inactive dans laquelle la limite supérieure (15) de l'élément se trouve à une distance plus grande du bord inférieur de la semi-remorque que dans la position active.

10. Procédé selon la revendication 9, **caractérisé en ce qu'**il comprend les étapes de
b) détecter la vitesse du véhicule tracteur et
c) comparer la valeur de la vitesse détectée avec celle d'une vitesse seuil prédéterminée,
et **en ce que** le mouvement à l'étape a) va vers la position active lorsque la vitesse du véhicule tracteur est supérieure à la vitesse seuil, mais va de la position active vers la position inactive lorsque la vitesse du véhicule tracteur est inférieure à la vitesse seuil.

11. Procédé selon la revendication 9 ou 10, **caractérisé en ce qu'**il comprend l'étape de
d) détecter la distance entre le bord supérieur (13) de la jupe latérale et le bord inférieur (14) d'une semi-remorque attachée au véhicule tracteur
et **en ce que** le mouvement à l'étape a) est effectué sur la base de la distance ainsi détectée.

12. Programme d'ordinateur qui peut être chargé directement dans une mémoire d'un ordinateur et qui comprend un code de programme d'ordinateur pour faire l'ordinateur, pour un véhicule tracteur (1) tractant une semi-remorque (2) attachée au premier et ayant sur au moins un de ses côtés, une jupe latérale (6) qui s'étend vers l'arrière, dans la direction longitudinale du véhicule tracteur, à partir d'une zone derrière les roues avant (5) et qui est configurée pour délimiter au moins partiellement latéralement un espace (4) situé en-dessous de la semi-remorque,
- faire déplacer un élément allongé (11) qui est configuré pour s'étendre dans ladite direction longitudinale le long de ladite au moins une jupe latérale (6), par rapport à la jupe latérale entre au moins une position active dans laquelle il couvre la distance entre un bord supérieur (13) de la jupe latérale et un bord inférieur (14) de la semi-remorque et sert ainsi comme une prolongation vers le haut de la jupe latérale, et une position au moins partiellement inactive dans laquelle la limite supérieure (15) de l'élément se trouve à une distance plus grande du bord inférieur de la semi-remorque que dans la position active.

13. Dispositif à programme d'ordinateur comprenant un moyen de stockage de données qui peut être lu par un ordinateur et sur lequel un code de programme d'ordinateur d'un programme d'ordinateur selon la revendication 12 est stocké.

14. Unité de commande électronique d'un véhicule comprenant un dispositif de mise en oeuvre (21), une mémoire (22) qui est reliée au dispositif de mise en oeuvre et un moyen de stockage de données (24) qui est relié au dispositif de mise en oeuvre et dans lequel est stocké le code de programme d'ordinateur d'un programme d'ordinateur selon la revendication 12.
